# EUROPÄISCHE PATENTSCHRIFT

(11) **EP 0 893 545 B1**
(45) Veröffentlichungstag und Bekanntmachung des Hinweises auf die Patenterteilung: **24.11.2004**
(21) Anmeldenummer: 98113551.0
(22) Anmeldetag: 21.07.1998
(51) Int. Cl.: E03F 3/04, E01C 11/22

(54) **Einbaurinne zum Verlegen in einem Fussboden**
Built-in drainage channel installable in a floor
Caniveau à encastrer pour la pose dans le sol

(30) Priorität: 23.07.1997 DE 29713012 U; 21.08.1997 DE 29714959 U
(43) Veröffentlichungstag der Anmeldung: 27.01.1999
(73) Patentinhaber: Blücher Germany GmbH, 78479 Reichenau (DE)
(72) Erfinder: Rau, Christian, 78462 Konstanz (DE)
(74) Vertreter: Hiebsch, Gerhard F., Dipl.-Ing.

(56) Entgegenhaltungen:
- DE-U- 8 813 624
- DE-U- 9 406 004
- DE-U- 9 411 477

## Beschreibung

Die Erfindung betrifft eine Einbaurinne zum Verlegen in einem Fußboden mit einem Rinnenprofil, das einen von Bodenstreifen und streifenartigen Sockel- und Seitenwänden als Seitenteilen gebildeten, sich zu einem Rinnenlängsschlitz nach oben verjüngenden polygonen Querschnitt aus einem Werkstoffblatt -- insbesondere aus einem Edelstahlblech -- aufweist, wobei an dieses Rinnenprofil seitliche Anbauelemente angeschlossen sind, nach dem Oberbegriff des Patentanspruches 1.

Der Querschnitt solcher aus der DE 33 09 178 C2 als Sammelrinnen für Räume der Nahrungsmittel verarbeitenden Industrie, in Metzgereien, Kellereien od. dgl. bekannter Einbaurinnen besteht beispielsweise aus zwei zueinander in einem Winkel verlaufenden Bodenstreifen, an die Seitenwandstreifen anschließen, die nahe dem Längsschlitz in zueinander geneigte First- oder Rinnenhalswände übergehen. Als Anbauelemente sind an den Firstwänden Verstärkungswinkel vorgesehen. Diese Einbaurinnen werden auf einem Rohboden oder über ausgesparten Vertiefungen eines Fußbodens angebracht.

Beim Verlegen der Rinne ergeben sich immer wieder Schwierigkeiten, weshalb oftmals Montagehilfen eingesetzt werden. Solche Montagehilfen -- die etwa aus der US-A 2,180,842 bekannt sind - - dienen dazu, die oberen Kanten der Rinne auf dem Niveau des fertigen Fußbodens so lange zu halten, bis die Rinne mit einer aushärtenden Gießmasse umgeben und eingebettet gehalten ist. Als Montagehilfen können auch Paare vertikaler Justierschrauben eingesetzt werden, die Langlöcher in den Anbauelementen durchgreifen und an denen Muttern verstellt werden; mittels der Muttern ist man in der Lage, die Kanten der Einbaurinne auf Fußbodenniveau einzustellen, um sie anschließend in einem Bett einer aushärtenden Gießmasse aufzunehmen, wobei die Oberfläche des Bettes vorteilhaft niveaugleich mit den Kanten der Einbaurinne liegt.

Die seitlichen Anbauelemente führen zu einer besseren Verankerung der Einbaurinne im Fußboden, zudem zu einer Lastverteilung in diesem.

Die eingangs beschriebene Einbaurinne ist der DE 94 11 477 U1 zu entnehmen. Auch die DE 94 06 004 U1 zeigt eine Rinne polygonen Querschnitts, von der in Abstand zueinander seitliche Horizontalplatten abragen, welche mit einem Rundloch jeweils an eine Justierschraube angeschlossen sind; letztere ist mit einer bodenwärtigen Unterlagsplatte verschraubt, verlötet, verklebt.

Die DE 88 13 624 U1 lässt seitliche Flügel mit Durchbrüchen erkennen, die von einem seitlich an die Rinne angefügten Blechstreifen abragen und deren freies Ende mit seitlichen Abkantungen ausgestattet ist.

Angesichts dieser Gegebenheiten hat sich der Erfinder das Ziel gesetzt, eine Rinne der eingangs erwähnten Art mit Anbauteilen so auszugestalten, daß sie bei der Montage leicht und schnell justiert sowie anschließend in der Gießmasse sicher verankert werden kann.

Zur Lösung dieser Aufgabe führt die Lehre des unabhängigen Anspruches, die Unteransprüche geben günstige Weiterbildungen an.

Erfindungsgemäß regen als Anbauelement von Seitenwand und Sockelwand achsparallele Flügelstege in Abstand zueinander ab, die endwärts durch ein gemeinsames Winkelprofil -- oder an ihrer Unterkante durch eine Fußplatte -- verbunden sind. Eine weitere Ausführung enthält als vom Rinnenprofil abragendes Anbauelement wenigstens einen achsparallelen Flügelsteg, an den eine Fußplatte lotrecht angeformt ist; letztere kann auch beidends an jeweils einen Flügelsteg angeformt sein.

Der besseren Einbettung halber sollen der Flügelsteg und/oder sein Winkelprofil und/oder seine Fußplatte mit jenen Durchbrüchen versehen sein.

Zudem hat es sich als günstig erwiesen, den Rinnenquerschnitt aus zwei zueinander geneigten Bodenstreifen, von diesen parallel ausgehenden Sockelwänden sowie an diese anschließenden Seitenwänden dadurch zu verbessern, daß das Verhältnis der Höhe der Sockelwand zur Rinnenhöhe etwa 1:3,5 beträgt und der Neigungswinkel zwischen Seitenwand und Querschnittslänge etwa 20°; dazu soll das Verhältnis der achsparallelen Höhe der Seitenwand zur Höhe der Sockelwand mit etwa 2:1 gewählt werden. Dank dieser Maßgaben werden die Seitenwände länger und steiler, d. h. die Kontrolle und Reinigung des Rinnenraumes wird erheblich vereinfacht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Schrägsicht auf einen Abschnitt einer nicht beanspruchten Einbaurinne;
- Fig. 2:: den Querschnitt durch Fig. 1;
- Fig. 3:: einen gegenüber Fig. 1,2 vergrößerten Querschnitt durch ein Rinnenprofil der Einbaurinne;
- Fig. 4,11, 15,17,19:: jeweils eine Schrägsicht auf nicht beanspruchte Ausgestaltungen von Rinnenprofilen;
- Fig. 7, 9, 13:: jeweils eine Schrägansicht auf erfindungsgemäße Ausgestaltungen von Rinnenprofilen;

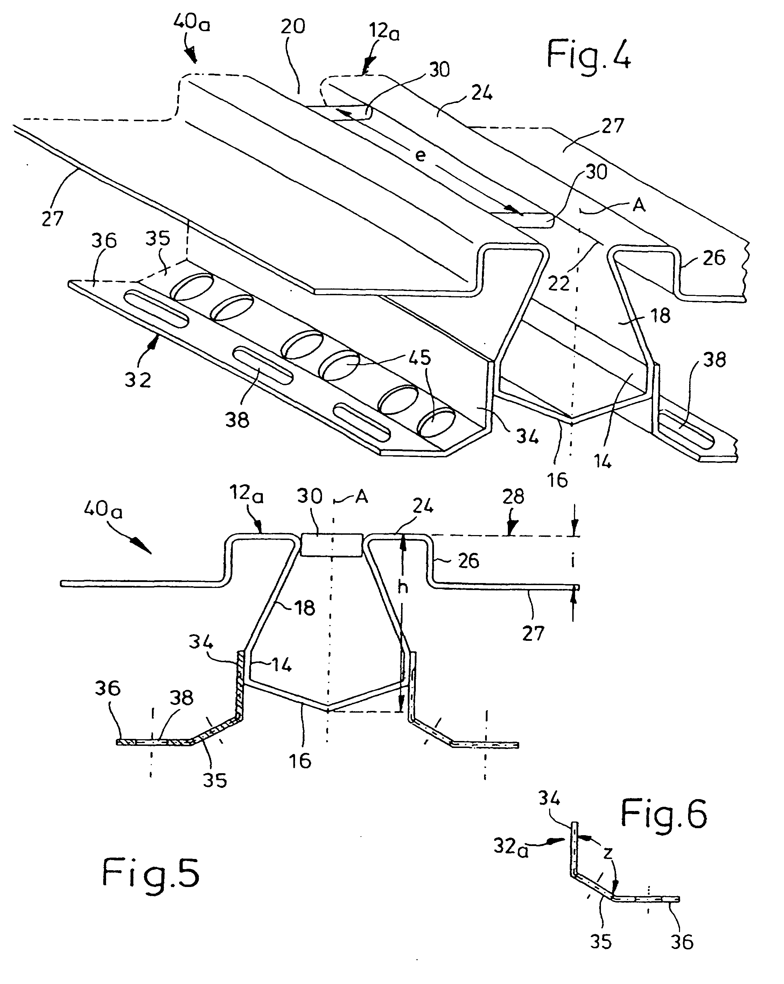

- Fig. 5, 12, 16,18,20:: die Querschnitte durch die Fig. 4, 11, 15,17,19;

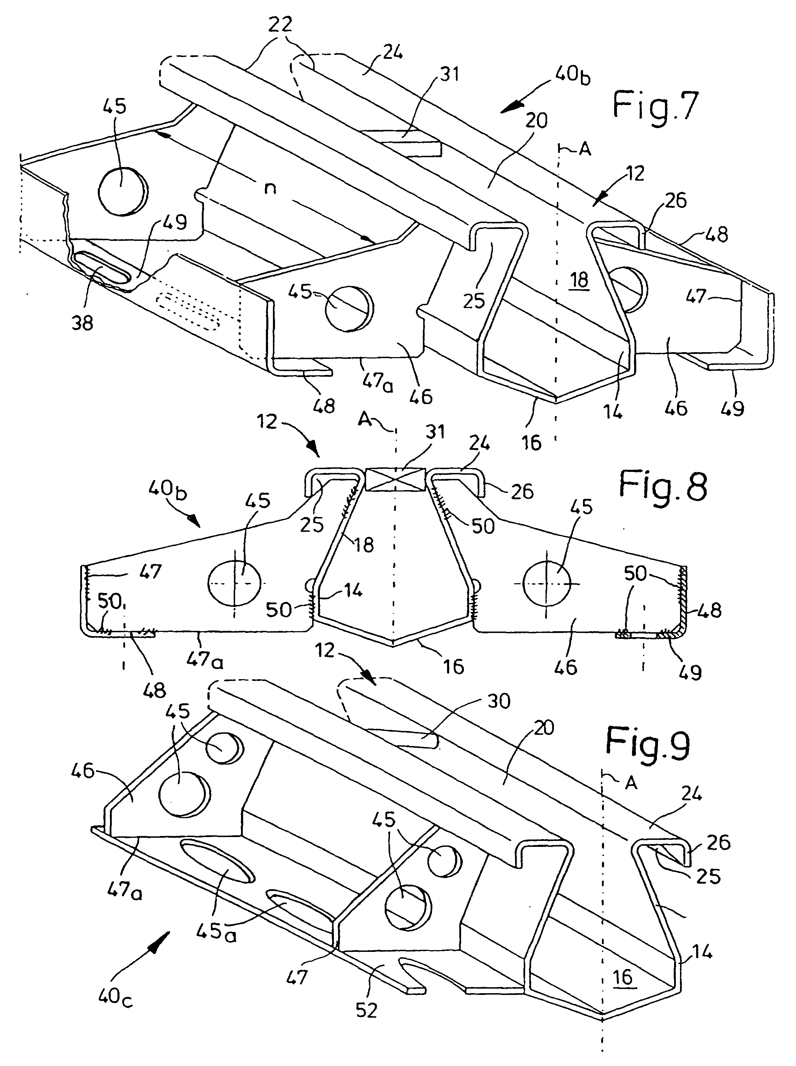

- Fig. 8,10,14:: die Querschnitte durch die Fig. 7,9,13;
- Fig. 6:: ein Detail aus Fig. 5.

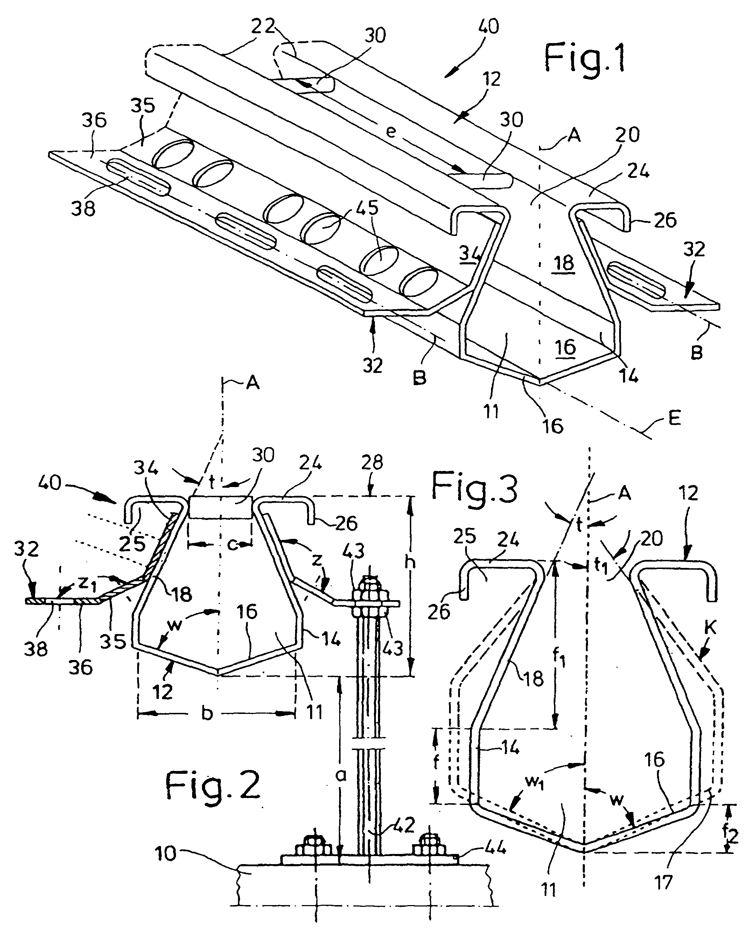

Über einer Rohdecke oder einem Rohboden 10 verläuft zu diesem in Abstand a ein -- in Fig. 1 bis 3 einen siebeneckigen Rinnenraum 11 anbietendes -- Rinnenprofil 12 aus Edelstahl der Rinnenhöhe h von etwa 60 mm bis 285 mm mit in lichtem Abstand b von etwa 50 mm bis 90 mm parallelen Sockelwänden 14, von deren unterem Rand zwei einen Boden bildende und zueinander geneigte Bodenstreifen 16 ausgehen sowie nach oben hin zwei Seitenwände 18. Die Bodenstreifen 16 sind zueinander geneigt und begrenzen jeweils mit der Längsachse A des Rinnenquerschnitts einen Winkel w von hier 70°.

Auch jene Seitenwände 18 sind -- unter Bildung eines Längsschlitzes 20 der Breite c von etwa 8 mm bis 20 mm -- von ihrer jeweiligen Sockelwand 14 ab zur Längsachse A in einem spitzen Winkel t von 21° einwärts geneigt und enden jeweils an einer Schlitzkante 22. Um diese sind seitliche Abkantstreifen 24 nach außen gebogen, die Winkelstücke mit zu den Sockelwänden 14 parallelen Endschenkeln 26 bilden. Diese seitlichen Abkantstreifen 24 sind nach dem Ausgießen einer Gießmasse auf den Rohboden 10 in einen -- aus Gründen der Übersichtlichkeit nicht dargestellten -- Bodenbelag eingebettet, und der von Abkantstreifen 24 und Endschenkel 26 begrenzte Rinnenraum 25 ist dann mit Gießmasse gefüllt. Die Oberfläche des Rohbodens 10 ist bei 28 lediglich angedeutet. Nahe dieser Oberfläche 28 sind die Seitenwände 18 des Rinnenprofils 12 -- in längeren Abständen e -- durch Querstäbe 30 miteinander verbunden.

Die Dicke des Edelstahlblechs des Rinnenprofils 12 beträgt hier zwischen 1 mm und 3 mm, bevorzugt 2 mm.

An den Außenflächen der geneigten Seitenwände 18 ist in Fig. 1,2 jeweils ein Profilstreifen 32 festgelegt -- beispielsweise geklebt, gelötet, geschweißt oder genietet --, der querschnittlich in drei Abschnitte aufgeteilt ist; an eine an die Seitenwand 18 angeschlagene Verbindungszone 34 schließt in einem Winkel z von etwa 140° eine Zwischenzone 35 an sowie an diese in einem Winkel z₁ von etwa 150° ein Befestigungsschenkel 36 mit Langlöchern 38, deren Längsachsen B parallel zur Längsachse E des Rinnenprofils 12 verlaufen. Die Langlöcher 38 sind in regelmäßigen Abständen auf den streifenartigen Befestigungsschenkeln 36 über dessen ganze Schenkellänge verteilt. Die Einheit aus dem Rinnenprofil 12 sowie den beidseitigen Profilstreifen 32 wird der besseren Übersicht wegen nachfolgend als Einbaurinne 40 bezeichnet.

Wenigstens eines der Langlöcher 38 des Profilstreifens 32 wird von einer Justierschraube 42 durchgriffen, an der mit Muttern 43 der Profilstreifen 32 -- und somit die Einbaurinne 40 -- fixiert zu werden vermag. Jede der Justierschraube 42 ragt von einer Sockelplatte 44 auf, die ihrerseits mit dem Rohfußboden 10, z. B. mittels Schrauben, verbunden ist., Zement, Kunstharzen od. dgl. -- wird der ganze Raum um das Aufbringen der aushärtenden Gießmasse -- z. B. Mörtel, Beton u. a. die Langlöcher 32 -- sowie zusätzliche Durchbrüche 45 der Zwischenzone 35 -- und bewirkt so eine verbesserte Fixierung des Rinnenprofils 12 bzw. der Einbaurinne 40 in der Gießmasse.

Von besonderer Bedeutung für die Hygiene des Rinnenprofils 12 ist dessen Querschnittsgestaltung. Fig. 3 läßt anhand einer gestrichelten Kontur K die bisher übliche Form von Rinnenprofilen erkennen; deren Winkel t₁ zwischen Querschnittslängsachse A und Seitenwand 19 der Kontur K mißt 35°, der Winkel w₁ zwischen Bodenstreifen 17 der Kontur K und der Querschnittslängsachse A hier 65°. Bei einer Bodenbreite b von etwa 50 mm und einer Rinnenhöhe h von 70 mm mißt die Höhe f der Sockelwände hier 20 mm, die achsparallele Höhe f₁ der Seitenwände 18 dazu 40 mm und die axiale Höhe f₂ der Bodenstreifen 16 lediglich 10 mm. Die größere Steilheit der neuen Seitenwände 18 des erfindungsgemäßen Rinnenprofils 12 verbessert den Zugriff eines reinigenden Wasserstrahls erheblich.

Bei der Einbaurinne 40ₐ der Fig. 4,5 sind die flankierenden Profilstreifen 32ₐ an die parallelen Sockelwände 14 angefügt, d. h. die Verbindungszonen 34 stehen parallel zur Querschnittslängsachse A; der Winkel z zwischen der Verbindungszone 34 und der Zwischenzone 35 mißt hier 120°. An den zur Querschnittslängsachse A parallelen Endschenkel 26 der Abkantstreifen 24 dieses Rinnenprofils 12ₐ ist hier jeweils ein zu den Abkantstreifen 24 paralleler Randstreifen 27 als Kleberand für Dünnbetteinbau angeformt. Die Höhe h des Rinnenprofils 12ₐ entspricht dem 3,5-fachen Abstand i -- etwa 10 bis 18 mm -- zwischen Kleberand oder Randstreifen 27 einerseits und Bodenbelagsoberfläche 28 anderseits.

Die Querstäbe 30 der Rinnenprofile 12,12ₐ der jeweiligen Einbaurinne 40,40ₐ dienen -- auch während des Gebrauches des Rinnenprofils 12,12ₐ -- als Versteifung. Der u.a. in Fig. 7,8 sichtbare quaderartige Distanzkörper 31 der Schwerlast-Einbaurinne 40_{b} kann hingegen auf Wunsch vor dem Einsatz oder nach dem Einbau der Einbaurinne 40_{b} der besseren Reinigung wegen entfernt werden.

An die Sockelwand 14 und die Seitenwand 18 des Rinnenprofils 12 dieser Einbaurinne 40_{b} sind im übrigen außenseitig flügelartige Stege 46 in Abstand n zueinander angeschweißt und ihre freien Stegendkanten 47 durch ein achsparalleles Winkelprofil 48 verbunden. Letzteres ist an die zur Querschnittslängsachse A parallele Stegendkante 47 und an die dazu rechtwinkelige Stegunterkante 47ₐ angeschweißt; die Schweißzonen sind mit 50 bezeichnet.

Die nach oben hin in den Rinnenraum 25 des oberen Rinnenendes einragenden flügelartigen Stege 46 bieten die erwähnten, von der Gießmasse zu durchsetzenden Durchbrüche 45 an, der untere -- der Stegunterkante 47 anliegende -- Schenkel 49 des Winkelprofils 48 enthält die beschriebenen Langlöcher 38.

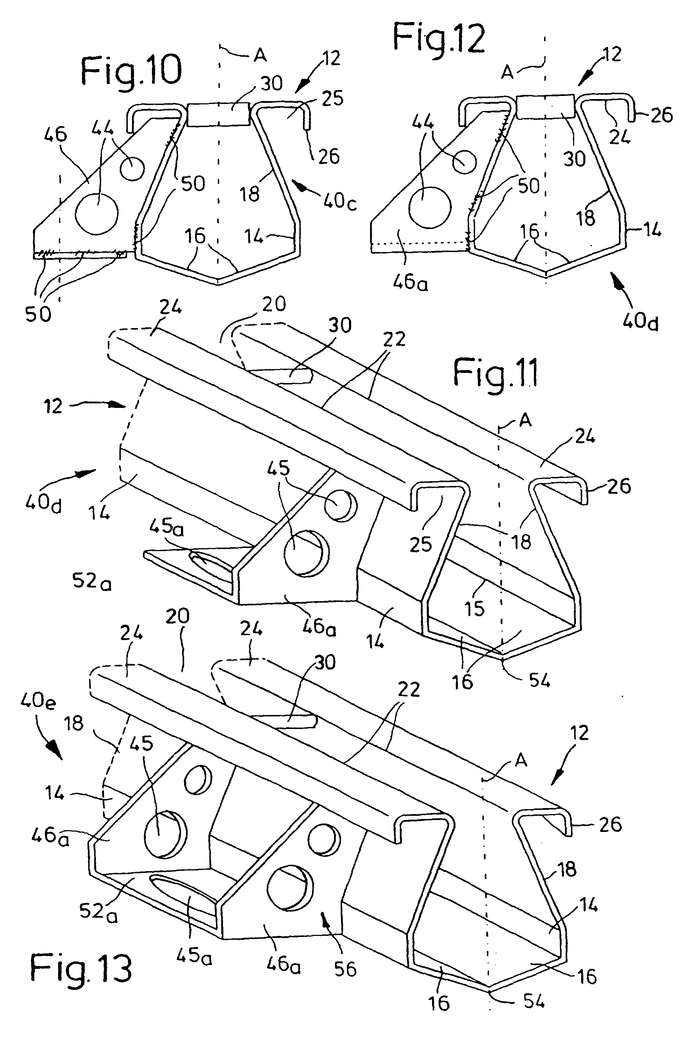

Die gegenüber den vorstehend erörterten Rinnen schwerere Einbaurinne 40_{c} der Fig. 9,10 ist einseitig mit den Flügelstegen 46 ausgestattet. An deren Stegunterkante 47ₐ ist eine äußere Fußplatte 52 mit ovalen Durchbrüchen 45ₐ angefügt.

Bei der Einbaurinne 40_{d} der Fig. 11,12 ist an jeden Flügelsteg 46ₐ eine kurze Fußplatte 52ₐ angeformt, der Flügelsteg 46ₐ weist also einen L-förmigen Querschnitt auf. Er endet nach unten hin mit der Fußlinie 15 der angrenzenden Sockelwand 14 -- also jedenfalls oberhalb der von den Bodenstreifen 16 gebildeten Kiellinie 54 -- und bietet wenigstens einen ovalen Durchbruch 45ₐ an. Letzterer kann -- wie im übrigen auch bei den anderen Einbaurinnen -- durch ein Langloch 38 ersetzt sein.

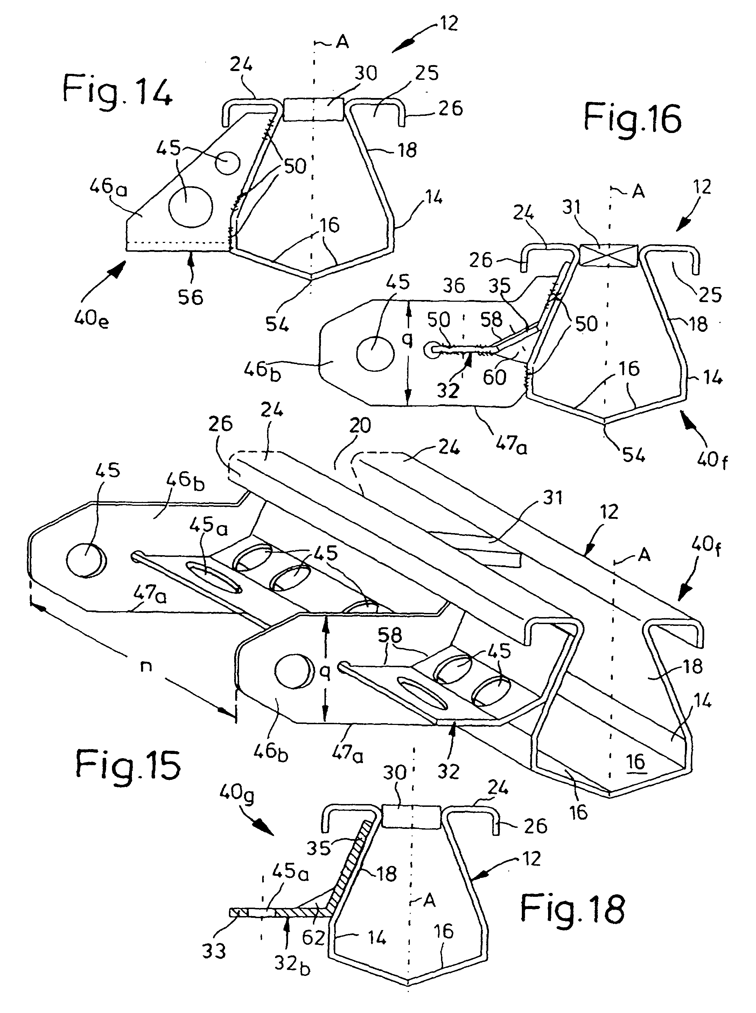

In Fig. 13,14 ist die oben beschriebene Fußplatte 52ₐ der Einbaurinne 40ₑ Mittelstück eines längsschnittlich U-förmigen seitlichen Anbauelements 56, das beidseits einen Flügelsteg 46ₐ als Schenkel anbietet.

Die in den Fig. 15,16 dargestellte Einbaurinne 40_{f} enthält i. w. das Rinnenprofil 12 der Fig. 1,2. Auf die -- einseitig vorgesehenen -- Profilstreifen 32 sind in Abständen n Flügelstege 46_{b} so aufgeschoben, daß ihre Unterkanten 47ₐ in Fig. 16 etwa mit jener Kiellinie 54 fluchten. Zur Aufnahme des Profilstreifens 32 verläuft in den Flügelstegen 46_{b} jeweils ein Einschubschlitz 58, der sich zur Seitenwand 18 hin bei 60 konisch erweitert, um auch die geneigte Zwischenzone 35 erfassen zu können; der äußere Befestigungsschenkel 36 des Profilstreifens 32 ist etwa in der Mitte der Steghöhe q angeordnet.

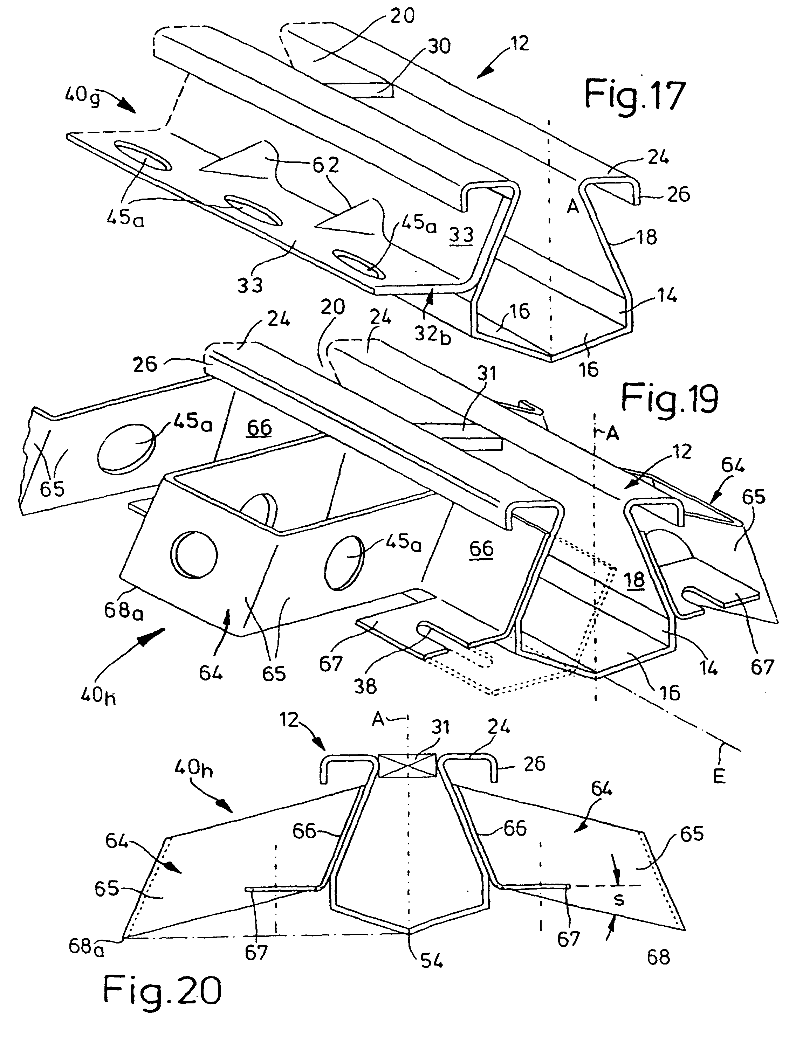

Der seitliche Profilstreifen 32_{b} der Einbaurinne 40_{g} der Fig. 17,18 ist ein an die Seitenwand 18 angefügtes Winkelstück mit zwischen seinen beiden Schenkeln 33 aus diesen herausgeformten, sich auswärts verjüngenden, den Profilstreifen 32_{b} verstärkenden Sicken 62.

Die schwere Einbaurinne 40ₕ der Fig. 19,20 besteht aus der Profilrinne 12 und beidseits angeschlossenen, mehrfach zinnenförmig gekanteten Blechstreifen 64; in Draufsicht U-artige Formbereiche 65 des Blechstreifens 64 wechseln ab mit von den Enden der Formbereichsschenkel abstehenden und miteinander fluchtenden Befestigungsabschnitten 66, welche an die Seitenwand 18 des Rinnenprofils 12 angefügt sind. Von den Unterkanten dieser Befestigungsabschnitte 66 ragen -rechtwinkelig zur Querschnittsachse A -- Laschenzungen 67 ab, die Langlöcher 38 anbieten. Zu diesen Laschenzungen 67 verläuft die Unterkante 68 des auskragenden U-artigen Formbereiches 65 in einem abwärts geneigten Winkel s von hier fast 20°; die Unterkante 68ₐ des zur Rinnenlängsachse E parallelen Mittelabschnitt des U-artigen Formbereichs 65 liegt etwa in einer von der Kiellinie 54 bestimmten Ebene.

## Patentansprüche

1. Einbaurinne zum Verlegen in einem Fußboden mit einem Rinnenprofil (12,12ₐ), das einen von Bodenstreifen (16) und streifenartigen Sockel- und Seitenwänden als Seitenteilen (14,18) gebildeten, sich zu einem Rinnenlängsschlitz (20) nach oben verjüngenden polygonen Querschnitt aus einem Werkstoffblatt, insbesondere aus einem Edelstahlblech, aufweist, wobei an dieses Rinnenprofil seitlich abkragende Anbauelemente (32, 32ₐ, 46/48, 46/52, 46ₐ/52ₐ, 32/46_{b}, 64) angeschlossen sind, in denen eine sie durchgreifende Gussmasse aufzunehmende Durchbrüche (38, 45ₐ) vorgesehen sind,
**dadurch gekennzeichnet,**
**dass** als Anbauelement von Seitenwand (18) und Sockelwand (14) zur Querschnittslängsachse (A) achsparallele Flügelstege (46, 46ₐ, 46_{b}) in Abstand (n) zueinander abragen, die endwärts durch ein gemeinsames Winkelprofil (48) oder an ihrer Unterkante (47ₐ) durch eine Fußplatte (52, 52ₐ) verbunden sind.

2. Einbaurinne nach Anspruch 1, **dadurch gekennzeichnet, dass** die Fußplatte (52ₐ) beidends an jeweils einen Flügelsteg (46ₐ) lotrecht angeformt ist.

3. Einbaurinne nach Anspruch 1 oder 2, **dadurch gekennzeichnet, dass** der Flügelsteg (46, 46ₐ, 46_{b}) und/oder sein Winkelprofil (48) und/oder seine Fußplatte (52, 52ₐ) mit den Durchbrüchen (45) versehen sind/ist.

4. Einbaurinne nach einem der Ansprüche 1 bis 3, **dadurch gekennzeichnet, dass** das Verhältnis der Höhe (f) der von den zueinander geneigten Bodenstreifen (16) ausgehenden Sockelwände zur Rinnenhöhe (h) etwa 1 : 3,5 beträgt sowie der Neigungswinkel (t) zwischen von den anderen Seitenteilen (18) dargestellten Seitenwänden und der Querschnittslängsachse (A) etwa 20°.

5. Einbaurinne nach Anspruch 4, **gekennzeichnet durch** ein Verhältnis der achsparallelen Höhe (f₁) der Seitenwand (18) zur Höhe (f) der Sockelwand (14) von etwa 2 : 1.

## Claims

1. Built-in conduit for laying in a floor with a conduit profile (12, 12ₐ), which has a polygonal cross-section, formed by floor strips (16) and strip-like base and side walls as side parts (14, 18) and tapering upwards to form a longitudinal slot (20) of the conduit, made from a piece of material, in particular from a sheet of high-grade steel, wherein adjoined to this conduit profile are laterally protruding additional elements (32, 32ₐ, 46/48, 46/52, 46ₐ/52ₐ, 32/46_{b}, 64), in which openings (38, 45ₐ) for receiving a cast mass passing through them are provided,
**characterised in that**
as additional element of the side wall (18) and the base wall (14) wing webs (46, 46ₐ, 46_{b}), which have axes parallel to the cross-sectional longitudinal axis (A) and are connected in the end direction by a common angled profile (48) or on their lower edge (47ₐ) by a foot plate (52, 52ₐ), project at a distance (n) from one another.

2. Built-in conduit according to claim 1, **characterised in that** the foot plate (52ₐ) is moulded on, perpendicular, to one wing web (46a) in each case at both ends.

3. Built-in conduit according to claim 1 or 2, **characterised in that** the wing web (46, 46ₐ, 46_{b}) and/or its angled profile (48) and/or its foot plate (52, 52ₐ) is/are provided with the openings (45).

4. Built-in conduit according to one of claims 1 to 3, **characterised in that** the ratio of the height (f) of the base walls issuing from the floor strips (16), inclined towards one another, to the height of the conduit (h) is approximately 1:3.5 and the angle of inclination (t) between side walls represented by the other side parts (18) and the cross-sectional longitudinal axis (A) is approximately 20°.

5. Built-in conduit according to claim 4, **characterised by** a ratio of the height (f₁) of the side wall (18) parallel to the axis to the height (f) of the base wall (14) of approximately 2:1.

## Revendications

1. Goulotte encastrable destinée à être posée dans un plancher et comportant un profilé de goulotte (12, 12ₐ) qui présente une section polygonale, constituée d'une feuille de matière, en particulier d'une tôle en acier fin, qui est formée de bandes de fond (16) et de parois latérales et de socle de type bande servant de pièces latérales (14, 18) et qui s'amincit vers le haut pour aboutir sur une fente longitudinale de goulotte (20), des éléments rapportés (32, 32ₐ, 46/48, 46/52, 46ₐ/52ₐ, 32/46ₐ, 64) qui forment des rebords saillants et dans lesquels des passages (38, 45ₐ) sont ménagés pour recevoir de la matière de coulée passant à travers étant raccordés à ce profilé de goulotte,
**caractérisée en ce que** les éléments rapportés sont des ailettes (46, 46ₐ, 46_{b}), disposées parallèlement à l'axe longitudinal (A) de la section, à une distance (n) les unes des autres qui font saillie de la paroi latérale (18) et de la paroi de socle (14) et qui sont reliées aux extrémités par une cornière commune (48) ou à leur bord inférieur (47ₐ) par une plaque d'assise (52, 52ₐ).

2. Goulotte encastrable selon la revendication 1, **caractérisée en ce que** la plaque d'assise (52ₐ) est conformée perpendiculairement aux deux extrémités à chaque fois sur une ailette (46ₐ).

3. Goulotte encastrable selon la revendication 1 ou 2, **caractérisée en ce que** l'ailette (46, 46ₐ, 46_{b}) et/ou sa cornière (48) et/ou sa plaque d'assise (52, 52ₐ) sont dotées de passages (45).

4. Goulotte encastrable selon l'une des revendications 1 à 3, **caractérisée en ce que** le rapport entre la hauteur (f) des parois de socle, partant des bandes de fond (16) inclinées l'une par rapport à l'autre, et la hauteur de goulotte (h) est de 1:3,5, et l'angle d'inclinaison (t) entre les parois latérales représentées par les autres pièces latérales (18) et l'axe longitudinale (A) de la section est de 20° environ.

5. Goulotte encastrable selon la revendication 4, **caractérisée par** une rapport entre la hauteur (f₁) parallèle à l'axe de la paroi latérale (18) et la hauteur (f) de la paroi de socle (14) est de 2:1 environ.
